# EUROPÄISCHE PATENTSCHRIFT

(11) **EP 0 929 756 B1**
(45) Veröffentlichungstag und Bekanntmachung des Hinweises auf die Patenterteilung: **04.12.2002**
(21) Anmeldenummer: 97944898.2
(22) Anmeldetag: 26.09.1997
(51) Int. Cl.: F16D 65/097, F16D 55/226

(54) **HALTEFEDERANORDNUNG FÜR EIN GEHÄUSE EINER TEILBELAG-SCHEIBENBREMSE**
RETAINING SPRING DEVICE FOR A PARTIAL LINING DISK BRAKE HOUSING
RESSORT DE RETENUE POUR BOITIER DE FREIN A DISQUE A GARNITURE PARTIELLE

(30) Priorität: 04.10.1996 DE 19640930
(43) Veröffentlichungstag der Anmeldung: 21.07.1999
(73) Patentinhaber: Continental Teves AG & Co. oHG, 60488 Frankfurt (DE)
(72) Erfinder: DAHLHEIMER, Günther, D-64546 Mörfelden (DE); SCHWALM, Uwe, D-35041 Marburg (DE); BENDER, Thomas, D-65812 Bad Soden (DE); MEISS, Michael, D-61169 Friedberg (DE); LEIDECKER, Hans-Dieter, D-65760 Eschborn (DE); MUSOLF, Jürgen, D-60323 Frankfurt (DE)
(74) Vertreter: Portwich, Peter
(86) Internationale Anmeldenummer: EP9705288
(87) Internationale Veröffentlichungsnummer: WO98015753

(56) Entgegenhaltungen:
- DE-A- 3 336 302
- US-A- 3 625 314
- US-A- 4 467 897

## Beschreibung

Die Erfindung betrifft eine Haltefederanordnung für ein Gehäuse einer Teilbelag-Scheibenbremse, insbesondere einer integrierten Scheibenbremse für Kraftfahrzeuge, bei der ein Bremsträger der Scheibenbremse in den Achsschenkel des Fahrzeuges integriert ist, wobei die Haltefeder zumindest einen sich im wesentlichen in Umfangsrichtung erstreckenden Federarm aufweist, der das Gehäuse und den Bremsträger miteinander verspannt.

Aus der DE 33 36 302 A1 ist bereits eine Haltefeder für ein Gehäuse einer Teilbelag-Scheibenbremse bekannt, die mit einem sich etwa tangential zur Bremsscheibe und parallel zur Rückenplatte eines Bremsbelages erstreckenden Schenkel versehen ist, dessen freies Endteil an einem von zwei Tragteilen des Bremsträgers federnd anliegt, wobei sie mindestens einen Arm aufweist, der mit der Rückenplatte des Bremsbelages fest verbunden ist. Die Haltefeder ist aus einem einzigen Drahtabschnitt gebildet und weist eine T-Konfiguration auf, wobei das der Bremsscheibenachse zugekehrte untere Ende des sich radial erstreckenden Armes der Feder mit einem sich am Tragteil abstützenden Schenkel versehen ist, der sich im übrigen parallel zu den beiden mit dem oberen Ende des radialen Armes verbundenen, den Bremssattel abstützenden Arme erstreckt und in seiner Länge so bemessen ist, daß er über das freie Ende des federnden Armes hinausragt.

Aus der DE 40 24 484 A1 ist ferner ein Schwimmsattel für eine Teilbelag-Scheibenbremse, insbesondere eine Faustsattelbremse bekannt, der an einem Bremsträger axial verschiebbar gelagert und mittels einer Gehäusehaltefeder gegen den Bremsträger verspannt ist, wobei die Gehäusehaltefeder an dem axial äußeren Schenkel des Schwimmsattels angehängt ist und im wesentlichen parallel zur Bremsscheibe verlaufende Federarme aufweist, die in radialer Richtung gegen den Bremsträger drücken und relativ hierzu in axialer Richtung verschiebbar sind, wobei der äußere Schenkel an seinem offenen Ende mindestens einen Vorsprung aufweist, an dem die Gehäusehaltefeder durch Einrasten gegen axiale Verschiebungen relativ zum Schwimmsattel verriegelt wird. Die Gehäusehaltefeder weist außerdem zwei Befestigungsarme auf, die gegenüber dem Mittelteil abgewinkelt und mit den umgebogenen Enden in Öffnungen des axial äußeren Schenkels des Schwimmsattels festgehakt sind.

Die deutsche Patentanmeldung 196 26 303.4 zeigt bereits eine Haltefeder, die an einem Teil der Scheibenbremse, insbesondere am äußeren Bremsbelag, schwenkbar angebracht ist. Diese Haltefeder benötigt zu ihrer Befestigung am Bremsgehäuse keine Bearbeitung und kann in einem vormontierten Zustand am Sattel angebracht werden, wobei auch der äußere Bremsbelag in der vorgesehenen Position fixiert wird, so daß ein Transport des Satzes ohne lose Teile möglich ist.

Der vorliegenden Erfindung liegt die Aufgabe zugrunde, eine Haltefeder der eingangs genannten Gattung zu schaffen, die ein Kippen des äußeren Bremsbelages weitgehend vermeidet.

Diese Aufgabe wird erfindungsgemäß dadurch gelöst, daß für die Halterung der Gehäusehaltefeder am Bremsbelag ein, insbesondere aus Blech gefertigtes, Halteelement vorgesehen ist, das an einem Teil des Bremsgehäuses abgestützt ist.

Mit der erfindungsgemäßen Lösung wird auf einfache Weise eine Halterung geschaffen, die ein Kippen des Bremsbelages sowohl im Anlieferungs- wie auch im Betriebszustand vermeidet.

Eine vorteilhafte Ausführungsform der Erfindung sieht vor, daß das Halteelement zumindest einen Arm zur Abstützung am Bremsgehäuse aufweist, der sich insbesondere im wesentlichen in tangentialer und/oder axialer Richtung erstreckt.

In zweckmäßiger Weise weist der Arm einen Endabschnitt zur Abstützung am Bremsgehäuse auf. Dieser ist zweckmäßig mit abgebogenen Randabschnitten versehen, um eine Schlupffase zu bilden, die die Montage erleichtert.

In sehr vorteilhafter Weise weist gemäß einer weiteren Ausführungsform der Erfindung das Halteelement zumindest einen weiteren Arm auf, der ein Halteteil für die Feder bildet und insbesondere mit dem Halteelement einstückig ausgebildet ist.

Weitere Vorteile und Merkmale der Erfindung ergeben sich aus der nachfolgenden Beschreibung der Erfindung anhand der Zeichnung.

Es zeigen:
- Fig. 1: eine Vorderansicht einer Teilbeiag-Scheibenbremse,
- Fig. 2: eine schematische Teil-Seitenansicht der in Fig. 1 dargestellten Teilbelag-Scheibenbremse, teilweise geschnitten, und
- Fig. 3: eine Gesamtansicht eines Halteelementes.

Die in der Zeichnung dargestellte Teilbelag-Scheibenbremse ist vom integrierten Typ, bei dem der (gestrichelt dargestellte) Bremsträger 2 in den Achsschenkel eines Fahrzeugs integriert ist. Der Bremsträger 2 weist einen sich im wesentlichen parallel zu einer (nicht dargestellten) Bremsscheibe erstreckenden Abschnitt 6 auf sowie zwei Bremsträgerarme 8,10, die sich parallel zur Achse der Bremsscheibe über deren Rand hinweg erstrecken. Am Bremsträger 2 ist ein Bremsgehäuse 12 axial verschiebbar gelagert, das den äußeren Rand der Bremsscheibe und zwei zu beiden Seiten der Bremsscheibe angeordnete Bremsbeläge 14,16 umgreift. Im Bremsgehäuse ist eine (hier nicht gezeigte) Betätigungseinrichtung angeordnet, mit der der innere Bremsbelag 14 gegen die Bremsscheibe gedrückt werden kann, so daß das Bremsgehäuse 12 sich in entgegengesetzter Richtung verschiebt und dadurch auch den äußeren Bremsbelag 16 gegen die Bremsscheibe drückt.

Die Bremsbeläge 14,16 weisen jeweils eine Rückenplatte und ein daran befestigtes Reibelement auf. Die Rückenplatten der Bremsbeläge bilden Enden 22,24, mit denen die Bremsbeläge an den Trägerarmen 8,10 abgestützt und geführt sind. Die Bremsträgerarme 8,10 bilden hierzu jeweils zwei im Winkel zueinander verlaufende Aufiageflachen 26,28 und Anlageflächen 30,32.

An der Rückenplatte 18 des äußeren Bremsbelages 16 ist ein Halteelement 34 befestigt. Dieses Halteelement 34 besteht aus Blech und weist einen Basisabschnitt 36 auf, der zur Befestigung des Halteelements an der Rückenplatte 18 dient. Die Befestigung des Halteelements 34 kann beispielsweise in der in der Patentanmeldung 196 26 303.4 gezeigten Weise erfolgen. Von der Basis 36 erstrecken sich zwei Schenkel 44,46 von der Rückenplatte weg.

Diese Schenkel 44,46 sind mehrfach umgebogen und weisen an ihren Enden Halteteile 48,50 für die Gehäusehaltefeder 52 auf. Ferner erstrecken sich von der Basis 36 des Halteelementes 34 zwei ebenfalls mehrfach umgebogene weitere Arme im wesentlichen in axialer/tangentialer Richtung, die an ihren Enden Endabschnitte 53,55 bilden.

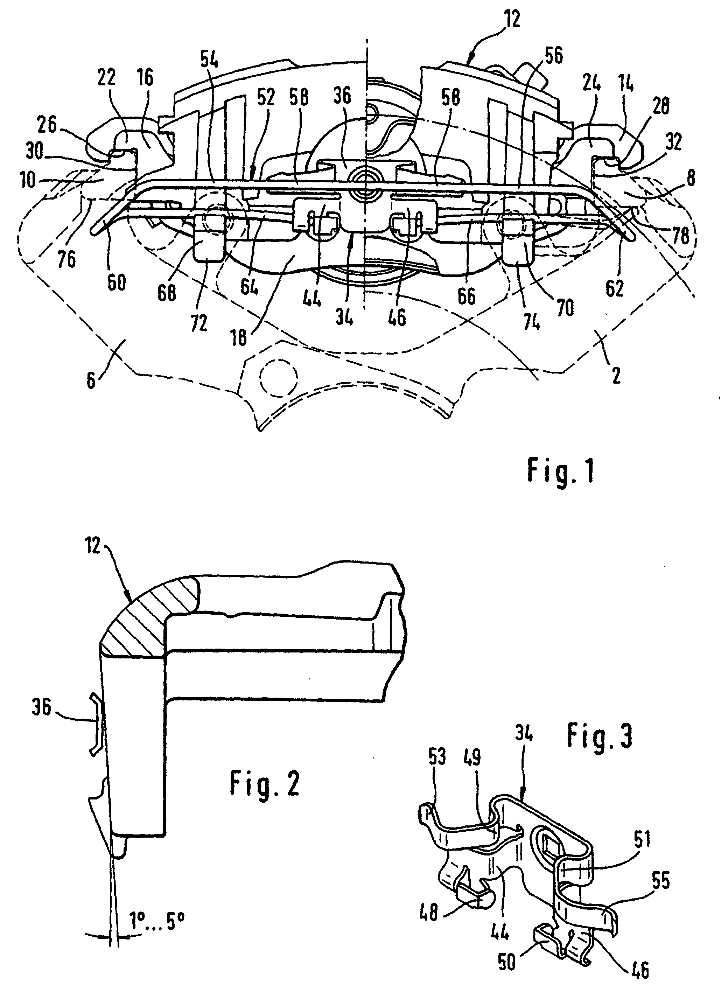

Die Gehäusehaltefeder 52 ist in einem Stück aus Draht gebogen und bildet zwei sich in tangentialer Richtung erstreckende Federarme 54,56. Die Gehäusehaltefeder 52 weist hierzu ein Mittelstück 58 auf, das im Bereich des äußeren Schenkels des Bremsgehäuses im wesentlichen gerade ausgebildet ist und in den darüber hinausragenden Bereichen etwa in einem Winkel von 45' zu den Bremsträgerarmen 8,10 hin umgebogen ist. Unter den Bremsträgerarmen 8,10 sind die Endstücke 60,62 der Gehäusehaltefeder 52 ausgebildet, wozu die Feder ein kurzes Stück, etwa parallel zu den Bremsträgerarmen 8,10 verläuft, um sodann in sich im wesentlichen tangential erstreckende freie Enden 64,66 überzugehen. Die freien Enden 64,66 werden von den Halterungen 48,50 umgriffen, wie in den Fig. 1 zu sehen ist. Im montierten Zustand (gestrichelt dargestellt) liegen die freien Enden 64,66 auf der Oberseite von vom Bremsgehäuse 12 ausgebildeten Vorsprüngen 68,70 auf, während das Mittelstück 58 der Gehäusehaltefeder unter von den Vorsprüngen 68,70 gebildeten Nasen 72,74 greift. Die Endstücke 60,62 der Gehäusehaltefeder liegen an Abstützflächen 76,78 der Bremsträgerarme 8,10 an.

Durch diese Befestigung wird die Gehäusehaltefeder 52 im vormontierten Zustand am Sattel gehalten und kann dabei auch den äußeren Belag 16 in der vorgesehenen Position fixieren, so daß ein Transport des Bremsgehäuses ohne lose Teile möglich ist. Bei der Endmontage wird die Gehäusehaltefeder um ihre von den freien Enden 64,66 gebildete Drehachse geschwenkt, so daß die Endstücke 16,62 der Gehäusehaltefeder sich an den Abstützflächen 76,78 der Bremsträgerarme 8,10 abstützen.

Die Endabschnitte 53,55 bilden zwei etwa in einem Winkel von 30 bis 40' zueinander verlaufende Teilflächen und könne an ihren Rändern umgebogen sein, um eine demontageerleichternde Schlupffase zu bilden. Um ein möglichst großes Moment zu erzielen, liegen die Endabschnitte beim montiertem Bremsbelag radial möglichst weit außen. Die Endabschnitte können sich hierbei direkt auf der unbearbeiteten oder bearbeiteten Außenseite des Bremsgehäuses abstützen, wie in den Fig. 1 zu sehen ist. Die Abstützflächen können hierbei in axial zurückgesetzten Bereichen des Bremsgehäuses angeordnet sein. Die erreichte maximale Wirksamkeit hinsichtlich der Kompensation eines Kippmomentes wird weiter dadurch verstärkt, daß an der Außenseite des Bremsgehäuses eine Gußschräge von etwa 1 - 5° vorgesehen ist (wie in Fig 2 gezeigt).

## Patentansprüche

1. Haltefederanordnung für eine Teilbelag-Scheibenbremse, insbesondere eine integrierte Scheibenbremse für Kraftfahrzeuge, bei der ein Bremsträger (2) der Scheibenbremse in den Achsschenkel des Fahrzeugs integriert ist, mit einer das Bremsgehäuse (12) der Scheibenbremse und den Bremsträger (2) miteinander verspannenden Gehäusehaltefeder (52), **dadurch gekennzeichnet, daß** die Gehäusehaltefeder (52) zumindest einen sich im wesentlichen in Umfangsrichtung erstreckenden Federarm (54,56) aufweist, der das Bremsgehäuse (12) der Scheibenbremse und den Bremsträger (2) direkt miteinander verspannt und daß für die Halterung der Gehäusehaltefeder (52) am Bremsbelag (16) ein separates, insbesondere aus Blech gefertigtes Halteelement (34) vorgesehen ist, das an einem Teil des Bremsgehäuses (12) abgestützt ist.

2. Haltefederanordnung nach Anspruch 1, **dadurch gekennzeichnet, daß** das Halteelement (34) zumindest einen Arm (49,51) zur Abstützung am Bremsgehäuse (12) aufweist.

3. Haltefederanordnung nach Anspruch 2, **dadurch gekennzeichnet, daß** der Arm (49,51) sich im wesentlichen in tangentialer und /oder axialer Richtung erstreckt.

4. Haltefederanordnung nach einem der Ansprüche 2 oder 3, **dadurch gekennzeichnet, daß** der Arm (49,51) einen Endabschnitt (53,55) zur Abstützung am Bremsgehäuse (12) aufweist.

5. Haltefederanordnung nach Anspruch 4, **dadurch gekennzeichnet, daß** der Endabschnitt (53,55) umgebogene Randabschnitte aufweist.

6. Haltefederanordnung nach einem der Ansprüche 1 bis 5, **dadurch gekennzeichnet, daß** am Halteelement (34) zumindest ein weiterer Arm (44,46) vorgesehen ist, der ein Halteteil (48,50) für die Gehäusehaltefeder (52) bildet.

## Claims

1. Holding spring arrangement for a spot-type disc brake, in particular an integrated disc brake for automotive vehicles, wherein a brake carrier (2) of the disc brake is integrated into the steering knuckle of the vehicle, with a housing holding spring (52) that clamps the brake housing (12) of the disc brake and the brake carrier (2) to one another,
**characterized in that** the housing holding spring (52) has at least one spring arm (54, 56) which extends generally in a circumferential direction and directly clamps the brake housing (12) of the disc brake and the brake carrier (2) to one another, and **in that** a separate holding element (34) is provided for mounting the housing holding spring (52) on the brake pad (16), the said holding element being particularly made of sheet metal and supported on a part of the brake housing (12).

2. Holding spring arrangement as claimed in claim 1,
**characterized in that** the holding element (34) has at least one arm (49, 51) for the support on the brake housing (12).

3. Holding spring arrangement as claimed in claim 2,
**characterized in that** the arm (49, 51) extends mainly in a tangential and/or axial direction.

4. Holding spring arrangement as claimed in any one of claims 2 or 3,
**characterized in that** the arm (49, 51) includes an end portion (53, 55) for the support on the brake housing (12).

5. Holding spring arrangement as claimed in claim 4,
**characterized in that** the end portion (53, 55) includes bent-off edge portions.

6. Holding spring arrangement as claimed in any one of claims 1 to 5, **characterized in that** the holding element (34) includes at least one further arm (44, 46) which forms a holding part (48, 50) for the housing holding spring (52).

## Revendications

1. Agencement de ressort de maintien pour un frein à disque à garnitures partielles, notamment un frein à disque intégré pour véhicule automobile, dans lequel un support de frein (2) du frein à disque est intégré dans la fusée d'essieu du véhicule, avec un ressort de maintien de boîtier (52) appliquant l'un sur l'autre avec serrage le boîtier de frein (12) du frein à disque et le support de frein (2), **caractérisé en ce que** le ressort de maintien de boîtier (52) comporte au moins un bras de ressort (54, 56) qui s'étend essentiellement suivant la direction circonférentielle et qui applique directement l'un sur l'autre avec serrage le boîtier de frein (12) du frein à disque et le support de frein (2) et **en ce que**, pour la fixation du ressort de maintien de boîtier (52) sur la garniture de frein (16), il est prévu un élément de maintien (34) séparé, réalisé notamment en tôle, qui est en appui sur une partie du boîtier de frein (12).

2. Agencement de ressort de maintien suivant la revendication 1, **caractérisé en ce que** l'élément de maintien (34) comporte au moins un bras (49, 51) servant à l'appui sur le boîtier de frein (12).

3. Agencement de ressort de maintien suivant la revendication 2, **caractérisé en ce que** le bras (49, 51) s'étend d'une manière essentielle suivant la direction tangentielle et/ou la direction axiale.

4. Agencement de ressort de maintien suivant l'une des revendications 2 ou 3, **caractérisé en ce que** le bras (49, 51) présente un tronçon d'extrémité (53, 55) servant à l'appui sur le boîtier de frein (12).

5. Agencement de ressort de maintien suivant la revendication 4, **caractérisé en ce que** le tronçon d'extrémité (53, 55) comporte des parties extrêmes repliées.

6. Agencement de ressort de maintien suivant l'une des revendications 1 à 5, **caractérisé en ce que**, sur l'élément de maintien (34), il est prévu au moins un autre bras (44, 46) qui constitue une partie de maintien (48, 50) pour le ressort de maintien de boîtier (52).
